Europäisches Patentamt

European Patent Office

Office européen des brevets

(11) Veröffentlichungsnummer: **0 224 883**
A1

(12) # EUROPÄISCHE PATENTANMELDUNG

(21) Anmeldenummer: 86116556.1

(51) Int. Cl.⁴: **G 01 N 27/30**

(22) Anmeldetag: 28.11.86

(30) Priorität: 03.12.85 DE 3542620
20.11.86 DE 3639518

(43) Veröffentlichungstag der Anmeldung:
10.06.87 Patentblatt 87/24

(84) Benannte Vertragsstaaten:
AT BE CH DE ES FR GB GR IT LI LU NL SE

(71) Anmelder: Conducta Gesellschaft für Mess- und
Regeltechnik mbH & Co.
Dieselstrasse 24
D-7016 Gerlingen b. Stuttgart(DE)

(72) Erfinder: Kreuer, Klaus-Dieter
Danzigerstrasse 3
D-7030 Böblingen(DE)

(72) Erfinder: Kohler, Heinz
Fichtenstrasse 44
D-7258 Heimsheim(DE)

(72) Erfinder: Stellmacher, Klaus
Poststrasse 22
D-7261 Oberreichenbach 4(DE)

(74) Vertreter: Otte, Peter, Dipl.-Ing.
Tiroler Strasse 15
D-7250 Leonberg(DE)

(54) Chemische Halbzelle.

(57) Bei einer chemischen Halbzelle, insbesondere Festkörperhalbzelle als Referenzsystem für beliebige elektrochemische Sensoren oder sensitive Festkörpersensoren für Ionen aller Art, z.B. für die potentiometrische Messung von Ionenkonzentrationen, für pH-, Redox- und ionensensitive Messung, bestehend aus einer mit dem Meßmedium die Phasengrenze bildenden Membran und einer dieser zugeordneten Ableitung für das erfaßte Potential wird vorgeschlagen, zur Bestimmung einer in weiten Bereichen wählbaren Sensitivität (Potential pro Dekade Konzentration) der Halbzelle die Membran als Festkörpermembran auszubilden, wobei die Festkörpermembran sowohl ein Metall in gemischt-valenter Form enthält als auch elektronische (bzw. Löcher-) Leitfähigkeit aufweist.

Fig.1

EP 0 224 883 A1

86116556,1
**0224883**

## DIPL.-ING. PETER OTTE PATENTANWALT
Vertreter beim Europäischen Patentamt / European Patent Attorney

7250 Leonberg
Tiroler Straße 15

2026/ot/mü
17.11.1986

Firma Conducta Gesellschaft für Meß- und Regeltechnik
mbH & Co., Dieselstr. 24, 7016 Gerlingen

Chemische Halbzelle

Stand der Technik

Die Erfindung geht aus von einer chemischen Halbzelle nach der Gattung des Hauptanspruchs. Chemische Sensoren sind in einer Vielzahl von Ausbildungsformen und für eine Vielzahl von Anwendungszwecken bekannt, beispielsweise als sensitiver Sensor für die Konzentrationsbestimmung von Kationen aller Art in einem Meßmedium, etwa als Glaselektrode für die pH-Werte-, die Redox- oder allgemein ionensensitive Messung oder auch kombiniert mit einer Bezugselektrode mit der Aufgabe, ein konstantes von der Lösungszusammensetzung unabhängiges Bezugspotential für die Meßelektrode herzustellen. Bekannt ist in der Betriebsmeßtechnik z.B. die Verwendung der Halbzelle Silber/Silberchlorid, KCL-Lösung, wobei die Trennung an der Kontaktstelle Elektrolyt/Meßlösung über eine Kapillarverbindung, üblicherweise ein sogenanntes Diaphragma erfolgt.

/2

Bleibt man zunächst bei Art und Ausbildung solcher Bezugselektroden, dann ist bei diesen problematisch die Möglichkeit einer von außen einwirkenden Kontamination oder Vergiftung, so daß solche Bezugssysteme, im Gegensatz zu
ihrer eigentlichen Aufgabe, nicht potentialkonstant sind.
Durch das Diaphragma kann eine Diffusion in beiden Richtungen erfolgen, beispielsweise veranlaßt durch Konzentrationsunterschiede zwischen dem Bezugselektrolyt und dem
Meßmedium, wobei bei einem Eindringen von Meßmedium in
das Innere der Bezugselektrode die Gefahr der Verstopfung
des Diaphragmas und die erwähnte Veränderung, also Vergiftung des Bezugselektroden und des Ableitsystems besteht.
In der Gegenrichtung können sich ein Verlust an Bezugselektrolyt oder durch sogenannte Auswaschungen Konzentrationsänderungen des Elektrolyten ergeben oder Elektrolyt-Ausfällungen (Kristallisation) das Diaphragma verstopfen.

Allgemein kann bei flüssige Medien als Elektrolyte enthaltenden chemischen Sensoren, auch Glaselektroden für
die potentiometrische Messung von Ionenkonzentrationen,
deren Lageabhängigkeit nachteilig sein; auch eignen sich
solche chemischen Sensoren weniger gut für eine Miniaturisierung, die bei physiologischen und biochemischen Anwendungsbereichen von Interesse ist.

Aus der internationalen PCT-Patentanmeldung mit der Veröffentlichungsnummer WO 83/0 33 04 ist ein ionenselektives
Meßelektrodensystem bekannt, welches als sensitiver Festkörpersensor zur potentiometrischen Messung von Ionenkonzentration eingesetzt werden kann und zwischen einer
mit dem Meßmedium die Phasengrenze bildenden ionenselektiven Membran, beispielsweise Glaskölbchen o.dgl. und der
elektrischen Ableitung, die ein Silberdraht oder Bronzedraht o.dgl. sein kann, eine sogenannte Intercalation- oder Einlagerungsverbindung enthält, die üblicherweise ein Bronzematerial von oxidischer Art ist und daher der Elektrode insgesamt Festkörpereigenschaften verleiht. Das Einlagerungsmaterial ist üblicherweise eine Lithium-Bronze, oder enthält Lithium, wobei die Entwicklung eines Meßpotentials am Elektrodensystem darauf zurückgeführt wird, daß das den Membranbereich bildende Glas durch Wasserstoffionen aus dem Meßmedium aufgeladen wird, was eine Diffusion von Lithiumionen in das Einlagerungsmaterial bewirkt. Durch diese positiv geladenen Lithiumionen ergibt sich die Bindung eines entsprechenden Anteils von Elektronen (Neutralitätsbedingung), so daß sich an der Ableitung das gewünschte, konzentrationsbezogene Potential ausbildet. Welches Bezugssystem bei dieser bekannten Festkörperelektrode verwendet wird, ist nicht angegeben.

Bekannt ist ferner (DE-OS 34 05 431) eine Meßsonde zur potentiometrischen Messung von Ionenkonzentrationen, bei der der Elektrolyt in Form eines in situ gebildeten hochviskosen Gels aus einem ionendurchlässigen Polymer und einer Neutralsalzsuspension vorliegt. Bei dieser Meßsonde könnte der temperaturabhängig hohe Ausdehnungskoeffizient des Gels nachteilig sein. Darüber hinaus handelt es sich hierbei um ein offenes System, folglich Vergiftung der Halbzelle.

Der Erfindung liegt die Aufgabe zugrunde, eine chemische Halbzelle zu schaffen, die als Festkörpersystem die Möglichkeit bietet, ihre Sensitivität wählbar in Abhängigkeit von der Zusammensetzung und Struktur des Halbzellenmaterials einzustellen und die insbesondere in der Lage ist, neben der möglichen variablen Einstellung der pro

/4

Konzentrationsdekade gelieferten Meßspannung auch ein Potential von 0 mV pro Dekade zu liefern, was ihre Verwendung als ideales Bezugssystem möglich macht. Eine solche Halbzelle mit geringer bzw. vernachlässigbarer Sensitivität läßt sich dann mit einer ionensensitiven Halbzelle mit entsprechend sensitiver Membran zu einem chemischen Sensor kombinieren.

Vorteile der Erfindung

Die erfindungsgemäße chemische Halbzelle löst diese Aufgabe mit den kennzeichnenden Merkmalen des Hauptanspruchs und hat den Vorteil, daß es erstmalig und in überraschender Weise möglich ist, für die chemische bzw. elektrochemische Meßtechnik eine Festkörperhalbzelle zu schaffen, deren zu messende Spannung pro Konzentrationsdekade des zu messenden Ions in Abhängigkeit zur Zusammensetzung der Festkörpermembran in weiten Bereichen wählbar verändert werden kann, mit den sich hierdurch aufgrund der Festkörpereigenschaft ergebenden Vorteilen einer entsprechenden Druck- und Lageunabhängigkeit, der Unmöglichkeit einer Vergiftung (Kontamination) des Systems, der weiteren Möglichkeiten zur Miniaturisierung bzw. allgemein beliebigen Gestaltung der äußeren Form des erfindungsgemäßen chemischen Sensors.

Die Erfindung beruht auf der Erkenntnis, daß durch eine bestimmte Wahl der Zusammensetzung sowie der Anteilsverhältnisse der die Festkörpermembran des chemischen Sensors bildenden Materialien die überraschende Möglichkeit geboten wird, die von einem solchen Sensor, insbesondere als Festkörpersensor gelieferte Spannung zwischen 0 mV/Dekade und idealem Nernst'schen Verhalten zu variieren. Hierdurch ergibt sich eine entscheidende Erweiterung der Meßmöglichkeiten und der Einsatzmöglichkeiten solcher chemischer Sensoren, insbesondere auch unabhängig zum Einsatzort und gegebenenfalls der Dauer des Einsatzes.

Es ist durch die Erfindung möglich, auf kleinstem Raum gleichzeitig die Meßelektrode und die Bezugselektrode zu vereinen, einfach indem man in einem mit dem jeweiligen Meßmedium in Verbindung tretenden Bereich unterschiedliche Zusammensetzungen der Festkörpermembran vorgibt und diese so bestimmt, daß beispielsweise ein bestimmter Bereich mit eigener Ableitung als Bezugssystem (Ausgangsspannung 0 mV/ Konzentrationsdekade) und ein anderer Bereich als Meßsystem eingesetzt werden kann, die im Idealfall natürlich auch den bekannten Wert von 58,16 mV/Konzentrationsdekade (bei T = 20°C) enthalten kann, d.h. mit anderen Worten, daß dieser Bereich Nernst'sches Verhalten zeigt.

Von weiterem Vorteil ist der besonders einfache Aufbau des erfindungsgemäßen chemischen Sensors, wobei gerade für die Art, Form und das Material der Trägersubstanz sowie der Ableitung unterschiedlichste Materialien verwendet werden können und auch auf konventionelle Lösungen zurückgegriffen werden kann. Beispielsweise kann die Ableitung auch konventionelle Halbzellen umfassen, wenn das Vorhandensein von Flüssigkeiten im Sensorbereich unkritisch ist.

Durch die in den Unteransprüchen aufgeführten Maßnahmen sind vorteilhafte Weiterbildungen und Verbesserungen des erfindungsgemäßen chemischen Sensors möglich.

Ausführungsbeispiele der Erfindung werden in der nachfolgenden Beschreibung anhand der Zeichnung näher erläutert: Es zeigen:

Fig. 1    einen nach Form und innerem Aufbau beliebigen chemischen Sensor, der die nachfolgend erläuterten,
erfinderischen Eigenschaften aufweist;

Fig. 2    in Form eines Diagramms den durch wiederholte Messung
bestimmten Spannungsverlauf über dem pH-Wert bei
einem ersten Ausführungsbeispiel, wobei im Diagramm
auch zum Vergleich der Verlauf der Nernst'schen Abhängigkeit vom pH-Wert dargestellt ist;

Fig. 3    ein der Darstellung der Fig. 2 entsprechendes Diagramm bei einem anderen Ausführungsbeispiel und die

Fig. 4    ebenfalls ein der Darstellung der Fig. 1 entsprechendes Diagramm bei einem weiteren Ausführungsbeispiel.

Die Diagramme sind jeweils Meßergebnisse, die sich in entsprechenden Versuchsreihen an Testmustern ergeben haben.

Beschreibung der Ausführungsbeispiele

Der Grundgedanke vorliegender Erfindung besteht darin, die
Zusammensetzung der Festkörpermembran der erfindungsgemäßen Halbzelle so zu bestimmen, daß diese über ihre Ableitung eine Ausgangsspannung oder ein Ausgangspotential
liefert, welches in Abhängigkeit zur Zusammensetzung der
Festkörpermembran variierbar ist, und zwar beliebig zwischen Nernst'schem Wert und Nullpotential.

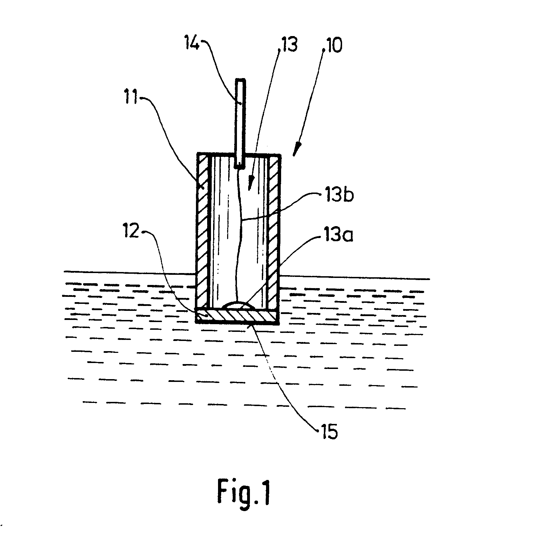

In der Darstellung der Fig. 1 ist der chemische Sensor insgesamt mit 10 bezeichnet; er umfaßt ein beliebiges Trägermaterial 11, welches bei dem dargestellten Ausführungsbeispiel im unteren Teil, auch einstückig, in die Festkörpermembran 12 übergeht. Die restlichen Komponenten,
die diese Festkörpermembran mit der das von dem chemischen
Sensor gelieferte Potential auswertenden Meßeinrichtung
verbinden, können insgesamt als Ableitung 13 bezeichnet

/7

werden und bestehen bei dem dargestellten Ausführungsbeispiel beispielsweise aus einem Silberleitlacktröpfchen 13a, welches einen geeigneten Draht 13b, etwa Kupferdraht u.dgl., mit der Festkörpermembran 12 verbindet, wobei dann der Draht 13b in eine äußere Anschlußverbindung 14 einmündet und das von ihm erfaßte Potential einem nicht dargestellten Meßgerät.zuführt.

Es wird ausdrücklich darauf hingewiesen, daß der in der Zeichnung dargestellte chemische Sensor nach Aufbau, Form, den verwendeten Materialien und der Zusammensetzung nach nicht einschränkend zu verstehen ist - die Darstellung der Zeichnung wurde gewählt aus Anschaulichkeitsgründen, denn die Trägersubstanz mit Festkörpermembran und Ableitung kann beliebige Formen annehmen, ist daher in der Form nicht fixiert und kann beispielsweise aussehen wie eine flache Scheibe, ein spitzer Bleistift, aber auch konventionelle Strukturen wie Glasröhrchen o.dgl. umfassen.

An der Phasengrenze 15 zwischen der Festkörpermembran 12 und dem Meßmedium, üblicherweise eine Meßflüssigkeit, entsteht die vom Sensor erfaßte Spannung, die über die Ableitung 13 zum Meßgerät gelangt.

Entscheidend bei vorliegender Erfindung ist daher die Ausbildung und Zusammensetzung der Festkörpermembran, wobei es der Erfindung gelingt, die Halbzellenspannung HZSp über die Membranzusammensetzung im Bereich 0 mV/Dekade < HZSp < Nernst-Spannung bei vernachlässigbarer Querempfindlichkeit gegen andere Spezies zumindest in einem Teilbereich der pH-Skala variabel einzustellen.

Im Sinne der Anwendung sind alle Festkörpermaterialien, die zumindest ein Element in gemischt-valentem Zustand enthalten und Elektronen bzw. Löcher leitend sind, als Membranmaterialien geeignet. Hierbei kann es sich um amorphe, kristalline oder mehrphasige Materialien handeln.

Je nach Art der Zusammensetzung und der Einwiegung der gemischt-valenten Verbindungen ergibt sich der gewünschte Einfluß auf die Steilheit der von der chemischen Halbzelle gelieferten Meßspannung (z.B. gemessen gegen $H_2$-Standard-Referenz), wobei festgestellt werden muß, daß der vollständige physikalisch-chemische Mechanismus, der diesen Möglichkeiten zugrunde liegt, derzeit nicht angegeben werden kann.

Gezeigt werden konnte allerdings, daß alle beanspruchten Verbindungen mit gemischt-valenten Elementen prinzipiell das gleiche Verhalten aufweisen. Das gemessene physikalisch-chemische Phänomen ist unabhängig davon, ob die Materialien in amorpher oder in kristalliner Form vorliegen. Oft ist jedoch die Sensitivität ein und desselben Materials im gemessenen pH-Bereich nicht konstant, so daß der mögliche Anwendungsbereich für eine bestimmte Zusammensetzung beschränkt sein kann. Allerdings ist der hier interessante Bereich geringer Sensitivität materialabhängig, d.h. die Auswahl des Referenz-Halbzellen-Materials wird je nach Anwendungszweck verschieden sein. Die Sensitivitätsunterschiede werden repräsentativ für die übrigen beanspruchten Verbindungen anhand von drei Beispielen weiter unten aufgezeigt.

Es ist zwar bekannt, daß man durch die Einmischung von wenigen Mol% gemischt-valenter Elemente (wie z.B. Uran) die nur schlechte Leitfähigkeit von ionensensitiven Glasmembranen verbessern kann, allerdings führt dies zu einer Erhöhung der Mobilität der Ionen (z.B. Li+), also zu einer geringfügigen Erhöhung der ionischen Leitfähigkeit, wodurch die Sensitivität der Halbzelle unbeeinflußt bleibt.

Es ist weiter vorn schon erwähnt worden, daß der Abgriff der von der Membran gelieferten Spannung, also Aufbau und Anordnung der Ableitung 13, an sich beliebig sein kann, eine solche Ableitung kann also gebildet sein beispielsweise wie bei einem konventionellen Elektrodensystem unter Verwendung einer geeigneten Elektrolytflüssigkeit, in welche auch ein übliches Silber/Silberchlorid, KCL-Lösungssystem, oder wie in der Zeichnung dargestellt in Form eines einen Draht 13b mit der Festkörpermembran 12 verbindenden Silberleitlacktröpfchens oder auch in Form bekannter Intercalations- oder Einlagerungsverbindungen, die angrenzend an die Festkörpermembran 12 angeordnet werden und die Spannung ableiten können als metallische Zwei- oder Mehrphasensysteme (Legierungen) wie z.B. "LiAl"-Legierungen oder "LiSn"-Legierungen, wenn die Membran $Li^+$-leitend ist, oder schließlich beispielsweise auch durch Aufdampfen einer geeigneten Edelmetallschicht.

Im einzelnen kann daher die Ableitung folgende Möglichkeiten umfassen:

1. Es können elektronische Leiter, bevorzugt Edelmetalle oder Halbedelmetalle vorgesehen und mit der Festkörpermembran 12 verbunden sein oder

2. die Sensorableitung kann gemischte Leiter (elektronisch und ionisch) wie die erwähnten Intercalationsverbindungen (z.B. Li-Vanadat oder Na-Wolframat) bzw. geeigneten Legierungen (z.B. "LiAl"-Legierung) mit geeigneter Metall-Ableitung umfassen, oder schließlich können als Ableitung

3. Mischungen aus Elektronen- und Ionenleiter wie z.B. Ag/AgCl, Ag/AgBr, Amalgame u.dgl. verwendet werden, ferner sind

4. kapazitive Ableitungen mittels Halbleiter (ISFET) u.dgl. möglich.

Solche Sensorableitungen eignen sich insbesondere für Sensoren mit Mehrschichtaufbau wobei z.B. folgende Trägermaterialien in Frage kommen:

Sämtliche nichtleitenden und nichtsensitiven Materialien wie z.B. Glas, Aluminiumoxid, Berylliumoxid, Kunststoffe, von beliebiger Form und relativer Zusammensetzung.

Ist der Sensor aus Glaskeramik, Glas, Keramik, als Einkristall, ebenfalls wieder von beliebiger Form und Zusammensetzung aufgebaut, dann eignet sich als Sensorableitung bevorzugt eine Edelmetallkontaktierung, die aufgeschmolzen, gesputtert, aufgedampft, durch Klebetechnik, in Form von Pasten, Siebdruck, aufgebracht ist oder die konventionellen Halbzellen aus Silber/Silberchlorid.

In der allgemeinen technischen Ausführung sind obenbenannte Halbzellen nicht ausschließlich auf die genannten Materialien beschränkt. Selbstverständlich ist das Verpressen, Versintern oder andersartige Einbringen der Ausgangsmaterialien in feinverteilter Form in ein Matrixmaterial wie z.B. Glas oder Teflon möglich. Des weiteren ist zu betonen, daß die oben beschriebenen Halbzellen-Materialien zwar im direkten Kontakt mit der Meßlösung stehen können, zur Verbesserung bzw. Anpassung dieser Systeme ist jedoch auch eine geeignete Beschichtung oder chemische Modifizierung der im Kontakt mit dem Meßmedium stehenden Halbzellen-Oberfläche möglich.

Die folgenden Herstellungsbeispiele werden angegeben:

Beispiel 1

Reduzierte Wolframoxide, bevorzugte Verbindung: $W_{18}O_{49}$
Gut Elektronen leitende Verbindungen erhält man durch

- Dotierung z.B. mit Seltenen Erden
- Herstellung einer binären Phase (bestehend aus zwei Elementen) aus Wolfram-Metall und $WO_3$ in reduzierender Atmosphäre - zur Erläuterung der binären Phase wird darauf hingewiesen, daß Sauerstoff z.B. in diesem Zusammenhang ausdrücklich als unabhängige Komponente zu verstehen ist, da aufgrund der Valenzfluktuation des Metalls das Verhältnis zu dessen Konzentration nicht festliegt, wie dies in voll oxidierten keramischen Systemen oft der Fall ist. In diesem Sinne wird z.B. $W_{18}O_{49}$ als eine binäre Verbindung verstanden.
- Reduzierung von $WO_3$ bei hohen Temperaturen und entsprechender Atmosphäre (z.B. $CO/CO_2$-Gemisch).

$W_{18}O_{49}$ wurde zu einer Keramik-Tablette dicht verpreßt, mit einem Edelstahl-Stift kontaktiert und dann das Halbzellen-Potential in thermostatisierter Lösung bei unterschied-

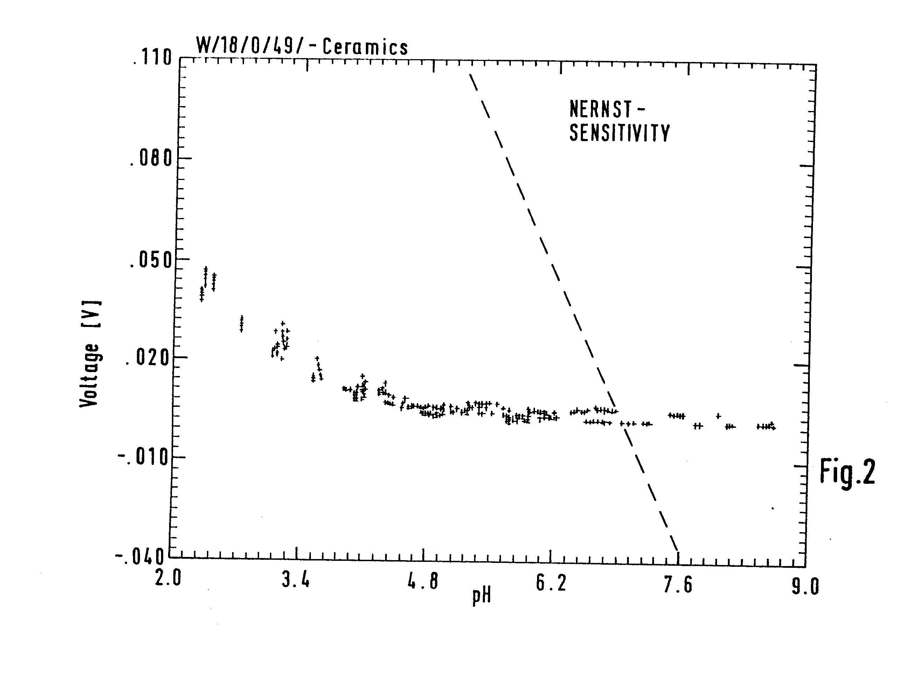

lichen pH-Werten während einer Gesamtmeßzeit von 120 Stunden aufgenommen (Fig. 2). Die Sensitivität (Steigung der Meßkurve) im Bereich 4,5 < pH < 9 ist ungefähr 1,3 mV/pH. Der elektronische Widerstand dieser Verbindung liegt bei ca. 0,2 Ohm.

Die in den Fig. 2, 3 und 4 gezeigten, durch Messung gewonnenen Kurvenverläufe zeigen, daß für alle Ausführungsbeispiele gut reproduzierbare Werte erzielbar sind, wobei die Messung so vorgenommen wurde, daß beispielsweise pro gegebenem Zeitintervall, etwa halbstündlich oder stündlich, der pH-Wert um einen vorgegebenen Schritt erhöht oder erniedrigt wird und während der Dauer des dann wieder konstant gehaltenen pH-Werts mehrere Messungen beispielsweise zehn Messungen, durchgeführt werden. Das enge Zusammenliegen der Meßwerte in den Kurvenverläufen zeigt, daß Drifteinflüsse praktisch vernachlässigbar sind.

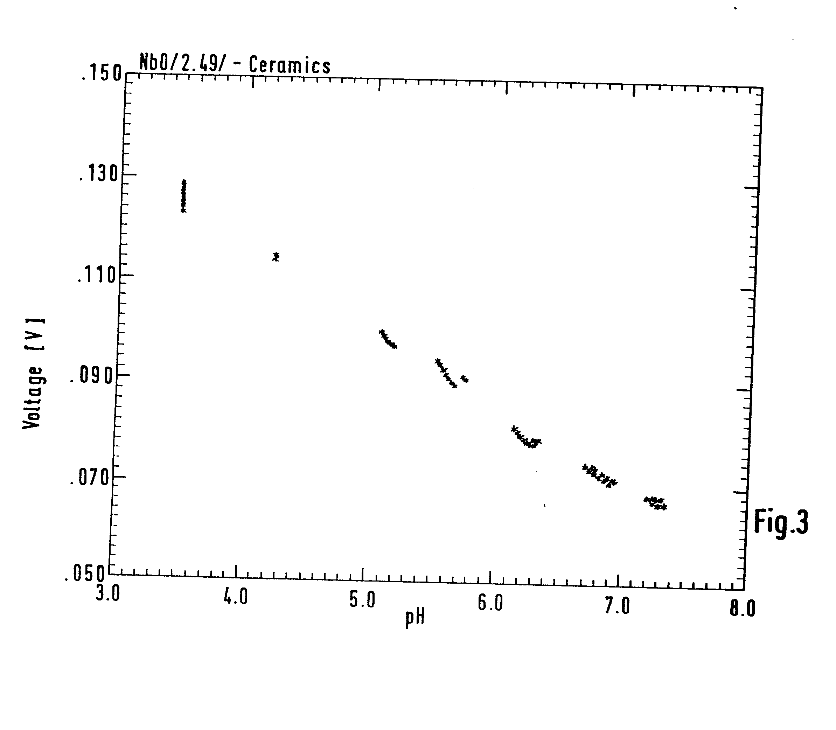

Beispiel 2
Reduzierte Nioboxide
Die Herstellungs- und Meßverfahren entsprechen denen der reduzierten Wolframoxide. Stellvertretend für diese Substanzklasse ist in Fig. 3 die Sensitivität von $NbO_{2,49}$ angegeben. Die Sensitivität ist im gesamten Meßbereich konstant und beträgt ungefähr 17 mV/pH.

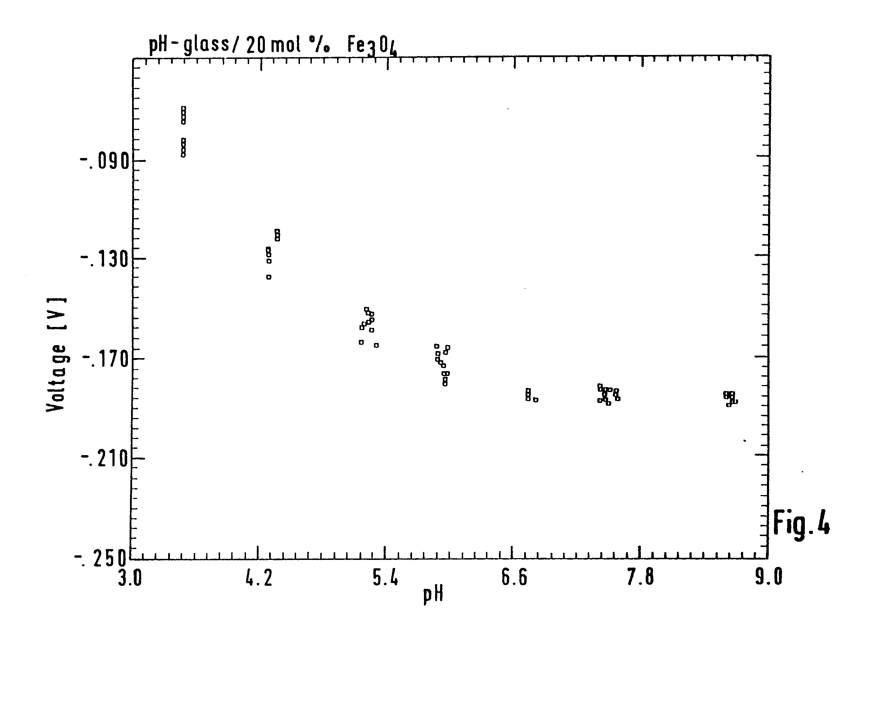

Beispiel 3
Glaskeramik
Eine Glaskeramik wurde durch Zugabe von 20 mol% $Fe_3O_4$ zur üblichen pH-Glasschmelze und anschließendes Abschrecken hergestellt. Sensitivität ist im Meßbereich oberhalb pH = 6 etwa 1,3 mV/pH (siehe Diagramm der Fig. 4).

Alle in der Beschreibung, den nachfolgenden Ansprüchen und
der Zeichnung dargestellten Merkmale können sowohl einzeln
als auch in beliebiger Kombination miteinander erfindungswesentlich sein.

## DIPL.-ING. PETER OTTE PATENTANWALT
Vertreter beim Europäischen Patentamt / European Patent Attorney

7250 Leonberg
Tiroler Straße 15

2026/ot/mü
17.11.1986

Firma Conducta Gesellschaft für Meß- und Regeltechnik
mbH & Co., Dieselstr. 24, 7016 Gerlingen

## Patentansprüche

1. Chemische Halbzelle, insbesondere Festkörperhalbzelle als Referenzsystem für beliebige elektrochemische Sensoren oder sensitive Festkörpersensoren für Ionen aller Art, z.B. für die potentiometrische Messung von Ionenkonzentrationen, für pH-, Redox- und ionensensitive Messung, bestehend aus einer mit dem Meßmedium die Phasengrenze bildenden Membran und einer dieser zugeordneten Ableitung für das erfaßte Potential, dadurch gekennzeichnet, daß zur Bestimmung einer in weiten Bereichen wählbaren Sensitivität (Potential pro Dekade Konzentration) der Halbzelle die Membran als Festkörpermembran ausgebildet ist und sowohl ein Metall in gemischt-valenter Form enthält als auch elektronische (bzw. Löcher-) Leitfähigkeit aufweist.

2. Chemische Halbzelle nach Anspruch 1, dadurch gekennzeichnet, daß das gemischt-valente Metall Bestandteil einer binären Phase der Festkörpermembran ist.

/2

3. Chemische Halbzelle nach Anspruch 1 bis 2, dadurch gekennzeichnet, daß es sich bei dem gemischt-valenten Metall um ein Nebengruppenelement bzw. ein Seltenerdmetall handelt.

4. Chemische Halbzelle nach Anspruch 3, dadurch gekennzeichnet, daß es sich bei dem gemischt-valenten Metall um Titan, Vanadium, Chrom, Mangan, Eisen, Kobalt, Nickel, Kupfer, Zirkon, Niob, Molybdän, Hafnium, Tantal, Wolfram oder Europium handelt.

5. Chemische Halbzelle nach den Ansprüchen 1 bis 4, dadurch gekennzeichnet, daß das gemischt-valente Metall in oxidischer Form vorliegt.

6. Chemische Halbzelle nach Anspruch 5, dadurch gekennzeichnet, daß die Festkörpermembran $WO_{3-x}$ ($x=0-2$), $MoO_{3-x}$ ($x=0-2$), $NbO_{2,5-x}$ ($x=0-2$) oder $TaO_{2,5-x}$ ($x=0-2$) enthält.

7. Chemische Halbzelle nach den Ansprüchen 1 bis 6, dadurch gekennzeichnet, daß das gemischt-valente Metall Bestandteil einer kristallinen, festen Phase ist.

8. Chemische Halbzelle nach den Ansprüchen 1 bis 6, dadurch gekennzeichnet, daß das gemischt-valente Metall Bestandteil einer amorphen, festen Phase ist.

9. Chemische Halbzelle nach den Ansprüchen 1 bis 8, dadurch gekennzeichnet, daß die Festkörpermembran ein homogener, amorpher Festkörper ist.

10. Chemische Halbzelle nach den Ansprüchen 1 bis 8, dadurch gekennzeichnet, daß die Festkörpermembran eine Glaskeramik ist.

11. Chemische Halbzelle nach den Ansprüchen 1 bis 8, dadurch gekennzeichnet, daß die Festkörpermembran ein kristalliner Festkörper ist (Polykristall, Einkristall).

12. Chemische Halbzelle nach den Ansprüchen 1 bis 8, dadurch gekennzeichnet, daß die Festkörpermembran einen elektrochemisch inerten Bestandteil enthält (z.B. Teflon als Einbettmittel).

13. Chemische Halbzelle nach den Ansprüchen 1 bis 12, dadurch gekennzeichnet, daß die Festkörpermembran mit pulvermetallurgischen Verfahren bzw. Dünn- oder Dickschichttechnik hergestellt wird, wobei die notwendige gemischte Valenz entweder durch die Wahl der Zusammensetzung der festen bzw. flüssigen Ausgangssubstanzen oder durch Wahl einer geeigneten Gasatmosphäre während der Präparation erzielt wird.

14. Chemische Halbzelle nach den Ansprüchen 1 bis 11, dadurch gekennzeichnet, daß das Potential der Festkörpermembran durch einen ohmschen Kontakt (z.B. Edelmetallableitung), einen Schottky-Kontakt, einen Elektrolyt in Verbindung mit einer konventionellen Referenzelektrode (z.B. Ag/AgCl), einer gemischt-leitenden Festelektrode (z.B. Intercallationsverbindung, mehrphasige Elektrode) oder durch kapazitive Ankopplung erzielt wird.

Fig.1

Fig.2

2/4

0224883

0224883

NbO/2.49/ - Ceramics

Voltage [V]

pH

Fig.3

pH-glass/ 20 mol % Fe₃O₄

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | SENSORS AND ACTUATORS, Band 5, Nr. 2, Februar 1984, Seiten 137-146, Elsevier Sequoia, Lausanne, CH; A. FOG et al.: "Electronic semiconducting oxides as pH sensors" * Seiten 137-145 * | 1-6 | G 01 N 27/30 |
| A | Idem | 13,14 | |
| | --- | | |
| X | US-A-3 462 353 (R.L. EVERY et al.) * Spalte 3, Zeile 36 - Spalte 5, Zeile 61 * | 1-4 | |
| | --- | | |
| X | US-A-3 825 482 (M.A. WECHTER et al.) * Spalte 3, Zeile 18 - Spalte 6, Zeile 20 * | 1-7,11 ,14 | RECHERCHIERTE SACHGEBIETE (Int. Cl.4) |
| | --- | | G 01 N 27/00 |
| P,X | DE-C-3 507 183 (DRÄGERWERK) * Spalte 1, Zeile 47 - Spalte 3, Zeile 29 * | 1-6 | |
| A | | 12,14 | |
| | --- | | |
| X | DE-B-1 301 304 (GUTHKE) * Spalte 1, Zeile 1 - Spalte 2, Zeile 34 * | 1-4 | |
| | -/- | | |

Der vorliegende Recherchenbericht wurde für alle Patentansprüche erstellt.

| Recherchenort | Abschlußdatum der Recherche | Prüfer |
|---|---|---|
| DEN HAAG | 13-03-1987 | BINDON C.A. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | | 12,13 | |

-----

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 13-03-1987 | BINDON C.A. |